# EUROPEAN PATENT APPLICATION

(11) **EP 3 101 788 A1**
(43) Date of publication of application: **07.12.2016**
(21) Application number: 16167759.6
(22) Date of filing: 29.04.2016
(51) Int. Cl.: H02K 29/03, H02K 1/27, H02K 1/06, H02K 1/14, D06F 37/30

(54) **SINGLE-PHASE OUTER-ROTOR MOTOR AND ELECTRIC APPARATUS HAVING THE SAME**

(30) Priority: 08.05.2015 CN 201510233218; 14.08.2015 CN 201510502469
(71) Applicant: Johnson Electric S.A., 3280 Murten (CH)
(72) Inventor: Li, Yue, Shatin, N.T. (HK); Zhou, Chui You, Shatin, N.T. (HK); Wang, Yong, Shatin, N.T. (HK); Li, Gang, Shatin, N.T. (HK); Li, Yong, Shatin, N.T. (HK); Zhang, Wei, Shatin, N.T. (HK); Chai, Jie, Shatin, N.T. (HK)
(74) Representative: Hocking, Adrian Niall

(57) **Abstract**

A single-phase outer-rotor motor includes a stator and a rotor. The stator includes a stator core with windings wound thereon. The stator core includes a yoke and multiple teeth each including a tooth body and a tooth tip. The rotor includes a rotor yoke and a permanent magnet forming a plurality of magnetic poles facing the tooth tips of the stator core. The magnetic poles and the tooth tips define a gap there between. When the motor is de-energized, the rotor is capable of being positioned at an initial position by a leakage magnetic field generated by the permanent magnet acting with the tooth tips of the stator core.

## Description

### FIELD OF THE INVENTION

The present invention relates to motors, and in particular, to a single-phase outer-rotor permanent magnet motor having small cogging torque and an apparatus employing the single-phase outer-rotor permanent magnet motor.

### BACKGROUND OF THE INVENTION

A single-phase outer-rotor brushless motor typically includes a stator and a rotor rotatable around the stator. The stator includes a stator core and a plurality of teeth extending from the stator core. The teeth are wound with windings thereon. The windings, upon being energized, produce an alternating magnetic field. The rotor is disposed to surround the stator, which usually includes a rotary shaft, a rotor yoke fixedly mounted to the rotary shaft, and a plurality of permanent magnetic poles fixed to the rotor yoke for forming a rotor magnetic field. The interaction between the rotor magnetic field and the stator alternating magnetic field causes the rotor to rotate. In order to avoid the rotor resting on the dead-point, outer surfaces of the teeth of the stator core usually adopt an asymmetric structure. The motor of such construction usually has a large cogging torque, which affects smooth rotation of the motor, thus producing speed ripple, vibrations and noises.

### SUMMARY OF THE INVENTION

Thus, there is a desire for a single-phase motor with reduced cogging torque and an apparatus employing the single-phase outer-rotor brushless motor.

In one aspect, a single-phase outer-rotor brushless motor is provided, which includes a stator and a rotor. The stator includes a stator core and windings wound around the stator core. The stator core includes a yoke and a plurality of teeth extending radially outwardly from the yoke. Each of the teeth includes a tooth body and a tooth tip extending from a distal end of the tooth body in a circumferential direction. The rotor includes a rotor yoke disposed around the stator core, and a permanent magnet disposed on an inner wall surface of the rotor yoke for forming a plurality of magnetic poles. An inner surface of the permanent magnet and an outer surface of the tooth tip are opposed to each other and define a gap therebetween for allowing the rotor to rotate relative to the stator. When the motor is de-energized, the rotor is capable of being positioned at an initial position by a leakage magnetic field generated by the at least one permanent magnet acting with the tooth tips of the stator core.

Preferably, a slot opening is formed between each two adjacent tooth tips, and a width of the slot opening in the circumferential direction is less than or equal to five times of a minimum radial width of the gap. More preferably, the width of the slot opening in the circumferential direction is less than or equal to three times of the minimum radial width of the gap.

Preferably, the gap is an uneven gap, a radial width of the gap associated with each magnetic pole progressively increases from a center portion toward circumferential ends of the magnetic pole.

Preferably, a ratio of a maximum radial width to a minimum radial width of the gap is greater than 1.5.

Preferably, a radial width of the gap associated with each magnetic pole is symmetrical with respect to a center axis of the magnetic pole along the circumferential direction.

Preferably, the outer surfaces of the tooth tips are located on the same cylindrical surface, and a center axis of the cylindrical surface is coincident with a center axis of the rotor.

Preferably, the inner surface of the permanent magnetic pole is a flat surface or arc surface, with a pole-arc coefficient greater than 0.75.

Preferably, the stator includes an insulating insulating bracket attached around the stator core and the windings wound around the insulating insulating bracket. The insulating bracket includes an upper bracket portion and a lower bracket portion. The upper bracket portion and the lower bracket portion cover the stator core from opposite axial ends thereof. Each of the upper bracket portion and the lower bracket portion includes a ring portion attached around the yoke of the stator core, sleeve portions attached around the tooth bodies, and resisting portions resisting against the inner surfaces of the tooth tips.

Preferably, a bent plate is disposed at an axial end of the resisting portion, which at least partially covers an end surface of an axial end portion of the tooth tip.

Preferably, a slit is formed at least in one connecting corner area between the tooth tip and the tooth body.

Preferably, the teeth of the stator core are separately formed and then interconnected to form the stator core.

Preferably, at least one tooth of the stator core is separately formed and then connected to the yoke.

Preferably, the rotor includes a plurality of the permanent magnets, and the permanent magnets are plastic-packaged into a whole body.

In another aspect, a single-phase permanent magnet motor is provided. The motor comprises an armature including a core and windings wound around the core, the core including an annular portion and a plurality of teeth extending outwardly from the annular portion, each of the teeth including a tooth body and a tooth tip extending from a distal end of the tooth body in a circumferential direction, a slot opening formed between each two adjacent tooth tips; and a yoke surrounding the armature and at least one permanent magnet disposed on an inner surface of the rotor yoke for forming a plurality of magnetic poles, inner surfaces of the magnetic poles facing outer surfaces of the tooth tips with a gap formed therebetween. A width of the slot opening in the circumferential direction is less than or equal to five times of a minimum radial width of the gap. A radial width of the gap associated with each magnetic pole progressively increases from a center portion toward circumferential ends of the magnetic pole.

Preferably, a width of the slot opening in the circumferential direction is less than or equal to three times of a minimum radial width of the gap.

Preferably, the gap is an uneven gap, and a ratio of a maximum radial width to a minimum radial width of the gap is greater than 1.5.

Preferably, a radial width of the gap associated with each magnetic pole is symmetrical with respect to a center axis of the magnetic pole along the circumferential direction.

Preferably, the tooth tip of the tooth is symmetrical with respect to a radius of the motor that passes through a center of the tooth body of the tooth.

Preferably, the teeth of the stator core are separately formed and then interconnected to form the stator core.

Preferably, at least one tooth of the stator core is separately formed and then connected to the annular portion.

Preferably, the rotor includes a plurality of the permanent magnets, and the permanent magnets are plastic-packaged into a whole body.

In still another aspect, a single-phase outer-rotor motor is provided which includes a stator and a rotor. The stator includes a stator core and windings wound around the stator core. The stator core includes a yoke and a plurality of teeth extending outwardly from the yoke. Each of the teeth includes a tooth body and a tooth tip extending from a distal end of the tooth body in a circumferential direction. The rotor includes a rotor yoke disposed around the stator core, and a permanent magnet disposed on an inner wall surface of the rotor yoke for forming a plurality of magnetic poles. An inner surface of the permanent magnet and an outer surface of the tooth tip are opposed to each other and define a gap therebetween for allowing the rotor to rotate relative to the stator. When the motor is de-energized, the rotor stops at an initial position where a middle line of the tooth tip of the stator is closer to a middle line of a neutral area between two adjacent magnetic poles than middle lines of the two adjacent magnetic poles.

An electric apparatus is further provided which employs the above single-phase outer-rotor motor. The electric apparatus includes an impeller or a speed reducing device driven by the motor.

In the above single-phase motor, magnetic bridge or small/narrow slot openings are defined between adjacent teeth of the stator core, the outer surface of the tooth tip of the stator tooth and the inner surface of the permanent magnet pole define the gap therebetween, the width of the slot opening in the circumferential direction is less than or equal to five times of a minimum radial width of the gap, and a ratio of a maximum radial width to a minimum radial width of the gap is greater than 1.5. As such, the rotor can be positioned at the initial position that deviates from the dead-point position by a leakage magnetic field produced by the rotor magnetic poles, and the cogging torque can be effectively suppressed.

In the following, the present invention will be described further with reference to the drawings and embodiments.

### BRIEF DESCRIPTION OF THE DRAWINGS

Fig. 1 illustrates a single-phase outer-rotor brushless motor according to one embodiment of the present invention.
Fig. 2 is a cross-sectional view of the single-phase outer-rotor brushless motor of Fig. 1, taken along a radial direction.
Fig. 3 is a cross-sectional view of the single-phase outer-rotor brushless motor of Fig. 1, taken along an axial direction.
Fig. 4 is an enlarged view of the portion circled by the dotted box of Fig. 2.
Fig. 5 illustrates a stator core of the single-phase outer-rotor brushless motor of Fig. 1.
Fig. 6 illustrates a insulating bracket of the single-phase outer-rotor brushless motor of Fig. 1.
Fig. 7 is an assembled view of the stator core of Fig. 5 and the insulating bracket of Fig. 6.
Fig. 8 illustrates the rotor resting at the dead-point position when the single-phase outer-rotor brushless motor is not energized.
Fig. 9 illustrates the rotor at the initial position when the single-phase outer-rotor brushless motor is not energized.
Fig. 10 illustrates a stator core of a motor according to a second embodiment of the present invention.
Fig. 11 illustrates a stator core of a motor according to a third embodiment of the present invention.
Fig. 12 and Fig. 13 illustrate a rotor of a motor according to another embodiment of the present invention.
Fig. 14 illustrates a rotor in accordance with another embodiment of the present invention.
Fig. 15 illustrates a rotor in accordance with another alternative embodiment of the present invention.
Fig. 16 illustrates a motor in accordance with another embodiment of the present invention.
Fig. 17 illustrates an embodiment of a fan employing the motor of the present invention.
Fig. 18 illustrates an electrical machine using the motor of the present invention.

### DETAILED DESCRIPTION OF THE PREFERRED EMBODIMENTS

Embodiments of the invention will now be described, by way of example only, with reference to figures of the accompanying drawings. In the figures, identical structures, elements or parts that appear in more than one figure are generally labeled with a same reference numeral in all the figures in which they appear. Dimensions of components and features shown in the figures are generally chosen for convenience and clarity of presentation and are not necessarily shown to scale.

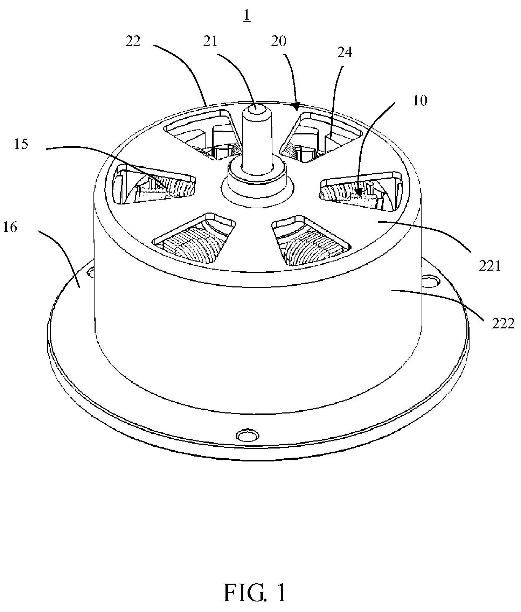

Referring to Fig. 1, Fig. 2 and Fig.3, a single phase permanent magnet motor in accordance with one embodiment of the present invention includes a stator 10 and a rotor 20 surrounding the stator 10. Preferably, the single phase permanent magnet motor is a single phase permanent magnet brushless motor.

The stator 10 includes a stator core 11 made of a magnetic-conductive material, an insulating bracket 13 attached on the stator core 11, and windings 15 wound around the insulating bracket 13.

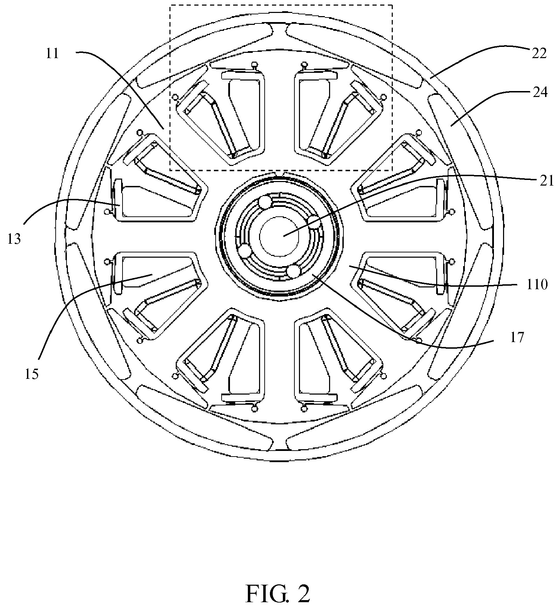

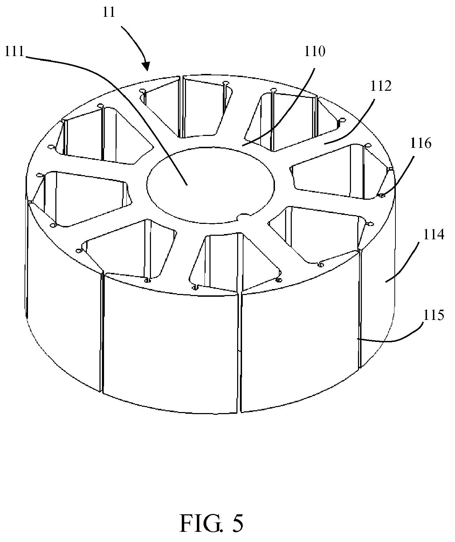

Referring also to Fig. 2, Fig. 4, and Fig. 5, the stator core 11 includes an annular portion 110, i.e. a stator yoke, disposed at a center of the stator core 11, and a plurality of teeth extending radially outwardly from the annular portion 110. A winding slot is formed between each two adjacent teeth. Each tooth includes a tooth body 112 and a tooth tip 114 extending from a distal end of the tooth body 112 along a circumferential direction of the stator. Each two adjacent tooth tips 114 define therebetween a slot opening 11 communicating with a corresponding winding slot. Preferably, each slot opening 115 has the same width in the circumferential direction. That is, the tooth tips are evenly arranged along the circumferential direction. Preferably, each tooth is symmetrical with respect to a radius of the motor that passes through a center of the tooth body of the tooth. Preferably, the tooth tips have the same circumferential width. Alternatively, the tooth tips may have different circumferential widths and each tooth may be asymmetrical with respect to a radius of the motor that passes through a center of the tooth body of the tooth.

The annular portion 110 is generally a hollow cylinder in shape. A through hole 111 is defined through a central portion of the annular portion 110 along an axial direction. As shown in Fig. 1, Fig. 2, and Fig. 3, the stator 10 further includes a base 16 and a bearing holder 17 formed on the base 16. The base 16 is generally circular disc-shaped. The bearing holder 17 extends perpendicularly from a central portion of the base 16, for fixedly mounting the stator core 11 thereon. Specifically, the bearing holder 17 is inserted through the through hole 111 of the annular portion 110 of the stator core 11. The bearing holder 17 defines therein a through hole for rotatably mounting a rotary shaft 21 of the rotor 20 therein.

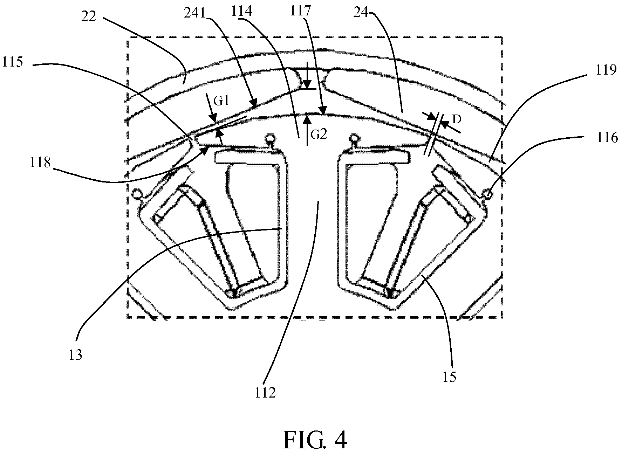

The tooth body 112 extends radially from an outer wall surface of the annular portion 110, and the tooth bodies 112 are evenly arranged along the circumferential direction of the annular portion 110. Each tooth body 112 has the tooth tip 114 formed at the radial distal end thereof. Preferably, the tooth tip 114 is a symmetrical structure with respect to a radius of the motor that passes through a center of the tooth body 112. Referring also to Fig. 4, an outer surface 117 of the tooth tip 114, i.e. a surface opposite from the annular portion 110, is an arc surface. Preferably, the outer surfaces 117 of the tooth tips 114 are located on the same cylindrical surface that has a central axis coincident with a central axis of the rotary shaft 21. An inner surface 118 of the tooth tip 114, i.e. a surface facing toward the annular portion 110, is a generally flat surface.

In some embodiments, slits 116 are formed in connecting corner areas between the tooth tip 114 and the tooth body 112. The provision of the slits 116 prevents creases during the process of bending the tooth tip 114 of the stator core 11 relative to the tooth body 112. Specifically, two parts/wings of the tooth tip 114 on opposite sides of the tooth body 112 extend radially outwardly in an initial state, such that the width of the winding slot and slot opening 115 may be enlarged to facilitate winding of the windings 15. After the winding is completed, the two parts of the tooth tip 114 are bent inwardly about the slits 116 to a final position by using a tool. It should be understood that, in some embodiments, the slit 116 may be formed only in a connecting corner area between the tooth body 112 and the part of the tooth tip 112 at a single side of the tooth body 112.

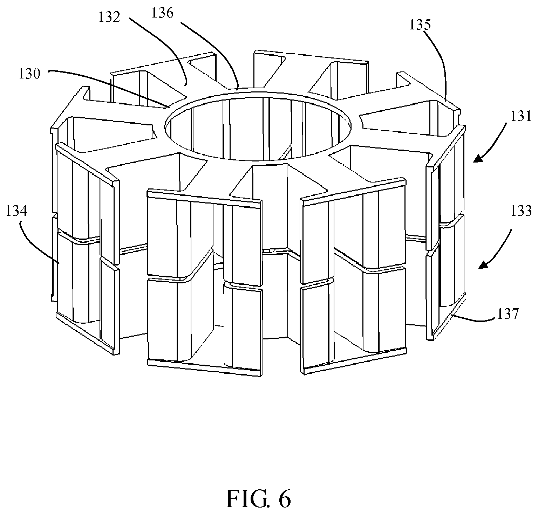

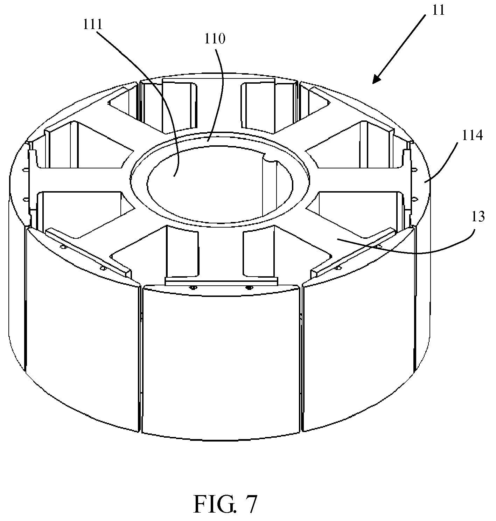

Referring to Fig. 6 and Fig. 7, the insulating bracket 13 includes an upper bracket portion 131 and a lower bracket portion 133. The upper bracket portion 131 and the lower bracket portion 133 cover the stator core 11 from opposite axial ends thereof.

The upper bracket portion 131 and the lower bracket portion 133 are substantially the same in shape and construction, and are disposed opposing to each other. Each of the upper bracket portion 131 and the lower bracket portion 133 includes a ring portion 130 attached around the annular portion 110 of the stator core 11, sleeve portions 132 attached around the tooth bodies 112, and resisting portions 134 resisting against the inner surfaces of the tooth tips 114. The ring portion 130 is generally circular tubular-shaped, which surrounds the outer wall portion of the annular portion 110 of the stator core. An annular end flange 136 extends inwardly from a top axial end of the ring portion 130. The end flange 136 covers a top end face of the annular portion 110 of the stator core. A side wall of the ring portion 130 forms a plurality of openings (not labeled) at which the sleeve portions 132 are disposed. The opening allows the tooth body 112 to pass therethrough. The sleeve portion 132 also has end surfaces and side surfaces corresponding to the end surface and side surfaces of the tooth body 112. The sleeve portion 132 covers end surfaces and two side surfaces of the tooth body 112. As described herein, the end surfaces of the tooth body 112 refer to a top surface and a bottom surface of the tooth body 112 in the axial direction o the motor, and the side surfaces of the tooth body 112 refer to the two surfaces that are parallel to the radial direction. It should be understood that the sleeve portion 132 of the upper bracket portion 131 covers the top surface and two side surfaces of the tooth body 112, and the sleeve portion 132 of the lower bracket portion 133 covers the bottom surface and two side surfaces of the tooth body 112. The upper bracket portion 131 and the lower bracket portion 133 covers substantially the whole side surfaces and end surfaces of the tooth body 112 so as to insulate the stator core 11 from the windings 15.

The resisting portion 134 is formed by bending a radial distal end of the sleeve portion 132 along the circumferential direction, which resists against the inner surface 118 of one corresponding tooth tip 114.

Further, a bent plate 135, 137 is disposed at an axial end of the resisting portion 134. The bent plate 135, 137 at least partially covers an end surface of the axial end portion of the tooth tip 114. In particular, the bent plate 135 is disposed at a top axial end of the resisting portion 134 of the upper bracket portion 131, which at least partially covers a top axial end surface of one corresponding tooth tip 114; the bent plate 137 is disposed at a bottom axial end of the resisting portion 134 of the lower bracket portion 133, which at least partially covers a bottom axial end surface of one corresponding tooth tip 114.

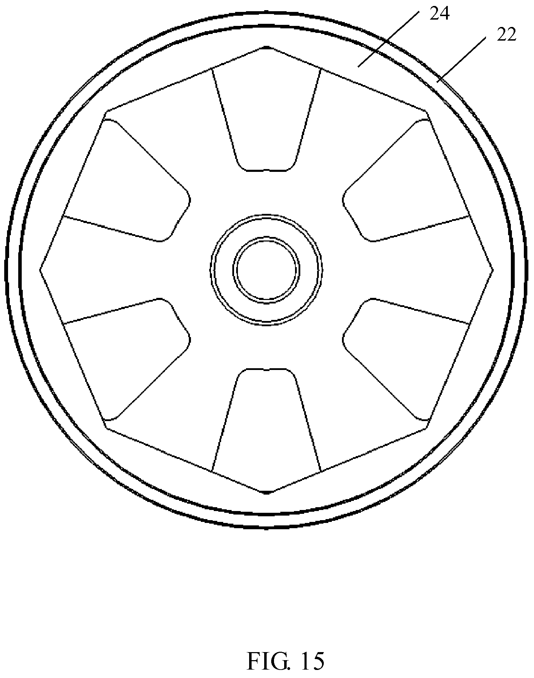

Referring to Fig. 1 through Fig. 3, the rotor 20 includes a rotary shaft 21 passing through the annular portion 110, a rotor yoke 22 fixedly connected with the rotary shaft 21, and a permanent magnet 24 disposed on an inner wall surface of the rotor yoke 22 for forming a plurality of permanent magnetic poles 24. In this embodiment, the permanent magnet 24 includes multiple split magnets, each forming a permanent magnetic pole 24. In an alternative embodiment, the permanent magnet may be formed into an integral ring magnet as shown in Fig. 15. The ring magnet comprises a plurality of sections each section forming a permanent magnetic pole 24. Preferably, an inner surface 241 of the permanent magnet 24 is a flat surface, such that fabrication of the permanent magnet 24 can be simplified. It should be understood, however, that the inner surface of the permanent magnet may also be an arc surface. Preferably, the pole-arc coefficient of the permanent magnet 24, i.e. a ratio of the actual angle of the permanent magnet 24 along the circumferential direction to the quotient of 360 degrees divided by the number of the rotor poles, is greater than 0.75, which can improve the cogging torque characteristics and enhance the motor efficiency.

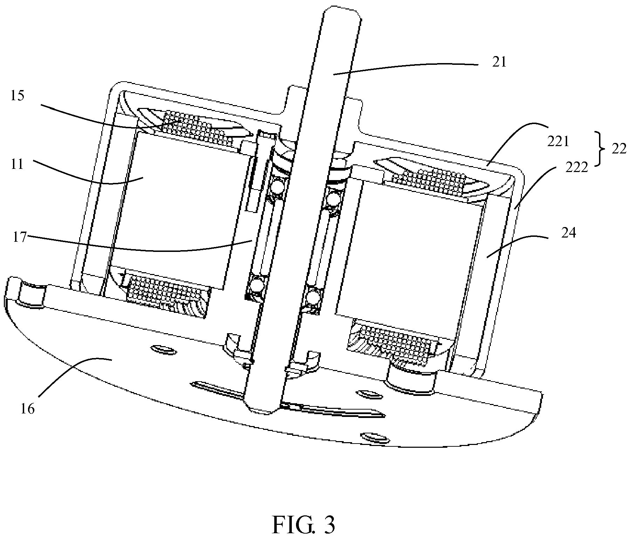

Referring to Fig. 3, the rotary shaft 21 is rotatably disposed in the through hole of the bearing holder 17. For example, the rotary shaft 21 is rotatably supported in the bearing holder 17 by a bearing. The rotor yoke 22 is generally barrel-shaped which covers the stator core 11. The rotor yoke 22 includes an end plate 221 fixedly connected with the rotary shaft 21, and an annular sidewall 222 extending from the end plate 221. The end plate 221 is disposed opposing to the base 16, with a gap formed between an axial end of the sidewall 222 and the base 16. The end plate 221 forms therein a plurality of windows for allowing outside air to enter and cool an interior of the motor. During operation of the motor, the rotor yoke 22 and the permanent magnet 24 rotate relative to the stator under interaction between the magnetic fields of the permanent magnet 24 and the stator.

In some embodiments, the number of the permanent magnetic poles 24 may be the same or has a multiple relation with the number of the teeth. For example, the number of the teeth is two or three times of the number of the permanent magnetic poles. In this embodiment, the rotor 20 includes eight permanent magnets respectively forming eight permanent magnetic poles, the stator 10 includes eight stator teeth, and a total of eight winding slots are formed between adjacent teeth, thus forming an 8-pole 8-slot motor. Preferably, the stator windings are electrically connected and supplied with single-phase direct current electricity by a single-phase brushless direct current motor driver, thus forming a single-phase direct current brushless motor. It should be understood that the present invention may be used as a single-phase permanent magnet synchronous motor where the stator windings are connected to a single phase alternating current power source.

As shown in Fig. 4, the inner surfaces 241 of the permanent magnetic poles 24 face the outer surfaces 117 of the tooth tips 114, with an air gap 119 formed therebetween. A radial width of the gap 119 varies along a circumferential direction of the permanent magnetic pole 24, thus forming an uneven gap. The radial width of the gap 119 progressively increases from a circumferential center toward opposite circumferential ends of an inner surface 117 of the permanent magnetic pole 24. As such, a radial distance between a circumferential center point of the inner surface of the permanent magnetic pole 24 and a cylindrical surface in which the outer surface of the tooth tip 114 is located is the minimum radial width G1 of the gap 119, and a radial distance between a circumferential end point of the inner surface of the permanent magnetic pole 24 and the cylindrical surface in which the outer surface of the tooth tip 114 is located is the maximum radial width G2 of the gap 119. Preferably, a ratio of the maximum radial width to the minimum radial width of the gap 119 is greater than 1.5, more preferably, greater than 2, i.e. G2:G1>2.

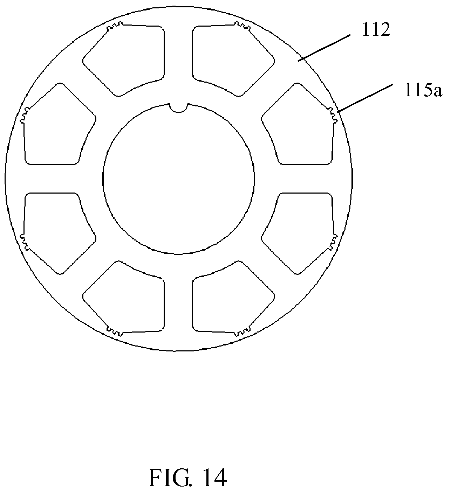

A width D (usually referring to the minimum width of the slot opening 115 in the circumferential direction) of the slot opening 115 is equal to or greater than 0, but less than or equal to five times of the minimum radial width of the gap 119, i.e. 0<D≤5G1. Preferably, the width D of the slot opening 115 is equal to or greater than the minimum radial width of the gap 119, but less than or equal to three times of the minimum radial width of the gap 119, i.e. G1≤D≤3G1. Alternatively, adjacent tooth tips 114 can be connected together by a narrow bridge 115a with a great magnetic resistance, as shown in Fig. 14.

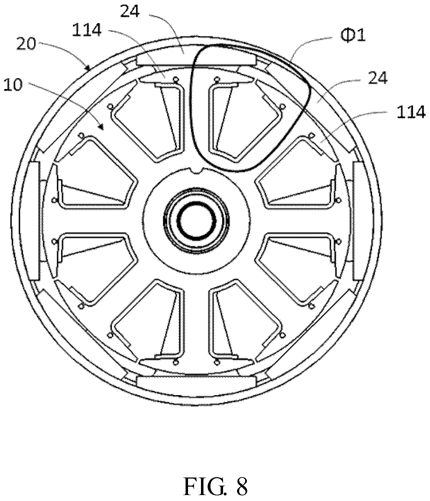

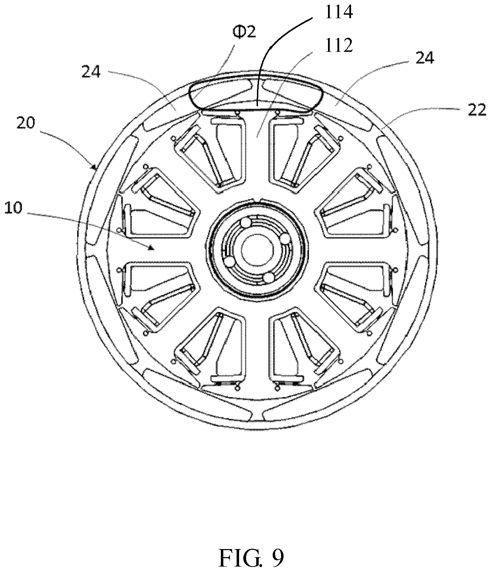

Referring also to Fig. 8 and Fig. 9, when the motor is not energized, the permanent magnet 24 of the rotor 20 produces an attractive force which attracts the teeth of the stator 10. Fig. 8 and Fig. 9 show the rotor 20 in different positions. Specifically, Fig. 8 shows the rotor 20 in a dead-point position (i.e. a center of the magnetic pole of the rotor is aligned with a center of the tooth tip of the stator). Fig. 9 shows the rotor 20 in an initial position (i.e. the stop position of the rotor when the motor is not energized or powered off). As shown in Fig. 8 and Fig. 9, the magnetic flux of the magnetic field produced by the magnetic pole of the rotor 20 that passes through the stator 10 is Φ1 when the rotor 20 is at the dead-point position, the magnetic flux of the magnetic field produced by the magnetic pole of the rotor 20 that passes through the stator 10 is Φ2 when the rotor 20 is at the initial position, and Φ2>Φ1 and the path of Φ2 is shorter than that of Φ1 and magnetic resistance of the magnetic circuit Φ2 is therefore less than that of Φ1. Therefore, the rotor 20 can be positioned at the initial position when the motor is not energized, thus avoiding stopping at the dead-point position and hence avoiding the failure of starting the rotor when the motor is energized. In this embodiment, the rotor 20 stops at the initial position shown in Fig. 9 when the motor is not energized or powered off. At this initial position, a middle line of the tooth tip 114 of the stator core is preferably aligned with a middle line of the neutral area between two adjacent rotor magnetic poles 24. This position deviates the furthest from the dead-point position, which can effectively avoid the failure of starting the rotor when the motor is energized. Due to other factors such as friction in practice, the middle line of the tooth tip 114 of the stator core may deviate from the middle line of the neutral area between two adjacent rotor magnetic poles 24 by an angle such as an angle of 0 to 30 electric degrees, but the stop position is still far away from the dead-point position. That is, when the motor is not energized, the rotor stops at an initial position where the middle line of the tooth tip of the stator core is closer to the middle line of the neutral area between two adjacent magnetic poles than middle lines of the two adjacent magnetic poles 24.

In the above embodiments of the present invention, the rotor can be positioned at the initial position deviating from the dead-point position by the leakage magnetic field produced by the rotor magnetic pole 24 itself attracting with the tooth tips of the stator core 11. The leakage magnetic circuit produced by the rotor magnetic pole 24 does not pass through the tooth bodies and the windings. The cogging torque of the single-phase permanent magnet brushless motor configured as such can be effectively suppressed, such that the motor has enhanced efficiency and performance. Experiments show that a peak of the cogging torque of a single-phase outer-rotor brushless direct current motor configured as above (the rated torque is 1Nm, the rated rotation speed is 1000rpm, and the stack height of the stator core is 30mm) is less than 80mNm. The motor of the present invention can be designed with bidirectional startup capability according to needs. For example, the bidirectional rotation can be achieved by using two position sensors such as Hall sensors and an associated controller. It may also be designed to start up in a single direction, in which case only one position sensor is needed.

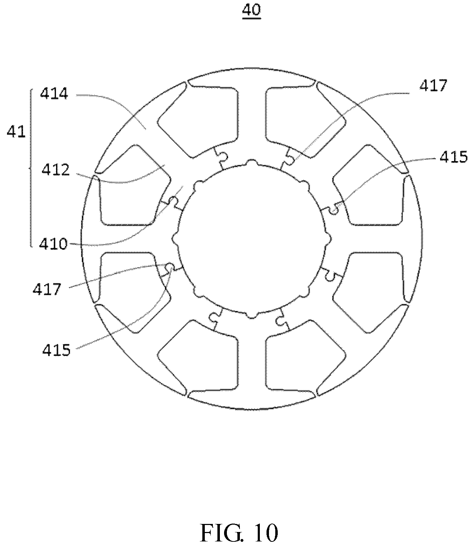

Fig. 10 illustrates a stator core 40 of a motor according to another embodiment of the present invention. The stator core 40 differs from the stator core 11 of the above embodiment in that: the stator core 40 of the present embodiment includes a plurality of individual tooth sections 41 that are connected with one another. Each tooth section 41 includes a yoke section 410, a tooth body 412 extending radially outwardly from the yoke section 410, and a tooth tip 414 extending from a distal end of the tooth body 414 in a circumferential direction. The tooth sections 41 are arranged along the circumferential direction to collectively form the stator core 40. The yoke sections 410 of the tooth sections 410 collectively form an annular yoke. The yoke sections 410 can be interlocked by convex-concave engagement structure therebetween. In this embodiment, a protrusion 415 is formed at one circumferential side of each yoke section 410, and a recess 417 is formed at the other circumferential side of each yoke section 410. The protrusion 415 of each yoke section 410 is snap-fit in the recess 417 of another adjacent yoke section 410, and the recess 417 of each yoke section 410 receives the protrusion 415 of another adjacent yoke section 410, such that all the tooth sections 41 are connected into a whole body. Alternatively, the yoke sections 410 may have flat contacting surfaces that are fixed to each other by welding. Because the stator core 40 may be formed by interconnecting individual tooth sections 41, winding can be performed prior to connecting the tooth sections 41 into a whole body. Therefore, the slot opening between the tooth tips 414 can have a reduced size without affecting the winding process.

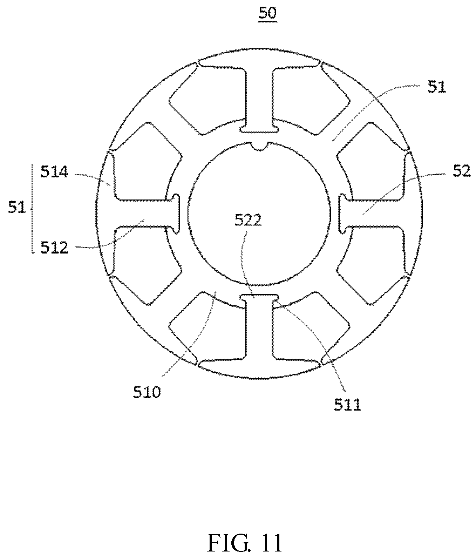

Fig. 11 illustrates a stator core 50 according to another embodiment of the present invention. The stator core 50 differs from the stator core 11 of the first embodiment in that: the stator core 50 of the present embodiment includes first teeth 51 integrally formed with the yoke 510 and separately formed second teeth 52. The second teeth 52 are snap-fit on the yoke 510, and the first teeth 51 and the second teeth 52 are alternatively arranged along the circumferential direction. Preferably, the second teeth 52 are inserted into the yoke portion 510. The yoke portion 510 has a plurality of inserting slots 511. A radial inner end of the second tooth 52 has an inserting portion 522 that matches with the inserting slot 511 in shape. Preferably, the inserting slot 511 is a swallowtail-shaped slot. The stator core 50 of this embodiment includes individual second teeth 52 which may be inserted into the yoke 510 after winding is completed. Therefore, the slot opening between the tooth tips can have a reduced size without affecting the winding process.

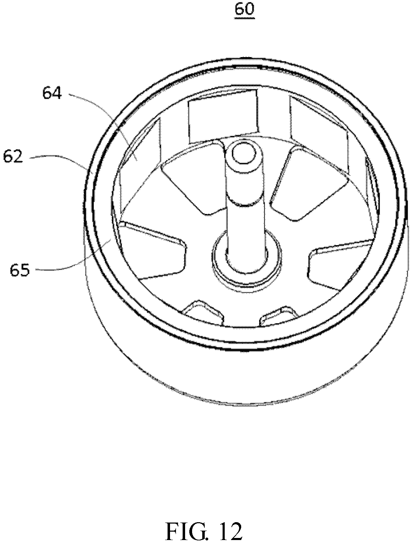

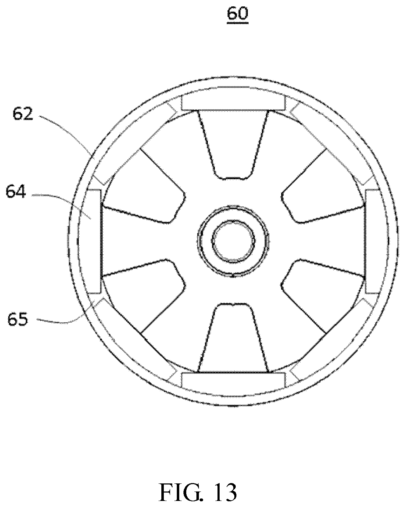

Fig. 12 and Fig. 13 illustrate a rotor 60 according to another embodiment of the present invention. The rotor 60 differs from the rotor 20 of the first embodiment in that: the rotor 60 further includes a packaging portion 65. Specifically, the rotor 60 is packaged by placing the rotor yoke 62 and permanent magnets 64 in a mold cavity and injecting plastic into the mold cavity.

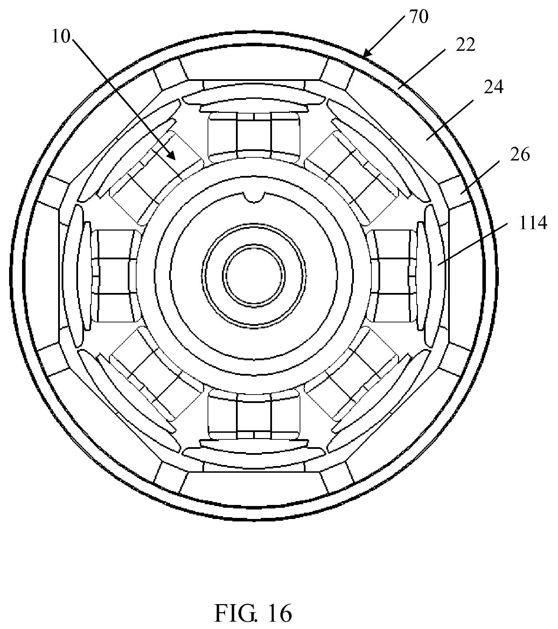

Fig. 16 illustrates a motor in accordance with another embodiment of the present invention. In this embodiment, the rotor 70 includes permanent magnets 26 and magnetic members 24 that are spacingly alternatively arranged in the circumferential direction. The permanent magnets 26 are magnetized in the circumferential direction of the rotor. Adjacent permanent magnets 26 have opposite polarities. The magnetic members 24 may be made from a hard magnetic material such as ferromagnet, or a soft magnetic material such as iron. The magnetic member 24 has a thickness progressively decreasing from a circumferential center to two circumferential sides thereof. A minimum thickness of the magnetic member 24, i.e. the thickness at its circumferential sides, is substantially the same as that of the permanent magnet 26. The inner circumferential surface of the magnet member 24 facing the stator is a flat surface extending parallel to a tangential direction of an outer surface of the stator. As such, the inner circumferential surfaces of the permanent magnets and the inner circumferential surfaces of the magnetic members collectively form the inner surface of the rotor which is a symmetrical polygon in a radial cross-section of the rotor 70. The inner surfaces of the permanent magnets and the inner surfaces of the magnetic members collectively form a polygonal inner surface of the rotor 70. The stator 10 and the rotor 70 form therebetween a symmetrical uneven gap, which has a size progressively decreasing from a circumferential center to two circumferential sides of the magnetic member 24, and reaches the maximum width Gmax at the position corresponding to the permanent magnet 26. When the motor is de-energized, the rotor 70 is capable of being positioned at an initial position by leakage magnet field generated by the permanent magnets 26 passing through adjacent magnetic members 24 and corresponding tooth tip of the stator.

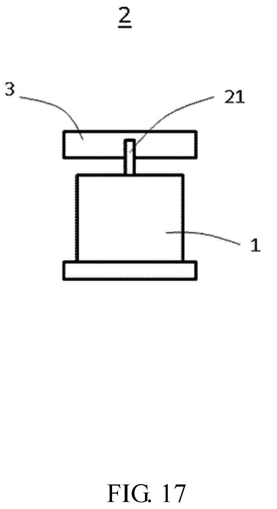

The motor of the present invention is particularly suitable for fans, such as, range hood fans, vehicle cooling fans, ventilating fans or the like. Fig. 17 illustrates the motor 1 of the present invention employed in a fan 2 according to one embodiment. The fan 2 further includes an impeller 3 connected with and hence driven by the motor 1 to produce airflows.

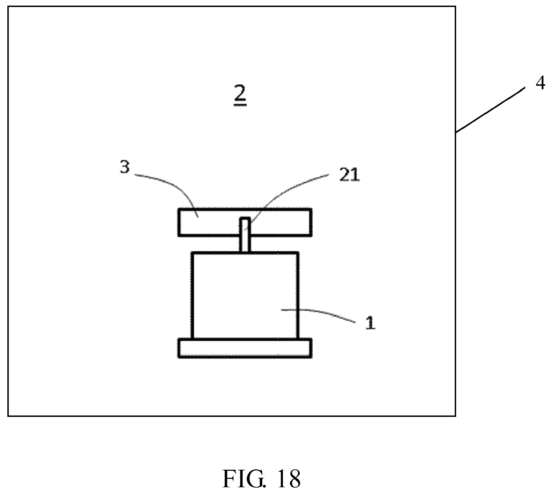

Fig. 18 illustrates the motor 1 of the present invention employed in an electric apparatus 4 according to another embodiment. The electric apparatus 4 may be a range-hood, a vehicle, or an air conditioner which comprises the fan 2 of Fig. 17. The electric apparatus 4 may also be a washing machine or a dry machine which comprises a speed reducing device 3 driven by the motor 1.

Understandably, the single phase permanent magnet motor may be a single phase permanent magnet brush motor which comprises an armature including a core and windings wound on the core and a yoke with permanent magnets fixed on the inner surfaces of the yoke.

In the description and claims of the present application, each of the verbs "comprise", "include", "contain" and "have", and variations thereof, are used in an inclusive sense, to specify the presence of the stated item but not to exclude the presence of additional items.

Although the invention is described with reference to one or more preferred embodiments, it should be appreciated by those skilled in the art that various modifications are possible. For example, the rotor magnetic poles may also be of an integrated type rather than the split-type as described in the embodiments above, the number of the slots and poles may vary from 2-pole 2-slot to N-pole N-slot without departing from the scope of the present invention. Therefore, the scope of the invention is to be determined by reference to the claims that follow.

## Claims

1. A single-phase outer-rotor motor comprising:
a stator comprising a stator core and windings wound around the stator core, the stator core comprising a yoke and a plurality of teeth extending outwardly from the yoke, each of the teeth comprising a tooth body and a tooth tip extending from a distal end of the tooth body in a circumferential direction; and
a rotor comprising a rotor yoke disposed around the stator core, and at least one permanent magnet disposed on an inner surface of the rotor yoke for forming a plurality of magnetic poles, inner surfaces of the magnetic poles facing outer surfaces of the tooth tips with a gap formed there between for allowing the rotor to rotate relative to the stator;
wherein, when the motor is de-energized, the rotor is capable of being positioned at an initial position by a leakage magnetic field generated by the at least one permanent magnet acting with the tooth tips of the stator core.

2. The single-phase outer-rotor motor of claim 1, wherein a slot opening is formed between each two adjacent tooth tips, and a width of the slot opening in the circumferential direction is less than or equal to five times of a minimum radial width of the gap.

3. The single-phase outer-rotor motor of claim 1 or claim 2, wherein the gap is an uneven gap, and a radial width of the gap corresponding with each magnetic pole progressively increases from a center portion of the magnetic pole toward circumferential ends of the magnetic pole.

4. The single-phase outer-rotor motor of claim 3, wherein a ratio of a maximum radial width to a minimum radial width of the gap is greater than 1.5.

5. The single-phase outer-rotor motor of claim 3, wherein a radial width of the gap corresponding with each magnetic pole is symmetrical with respect to a middle line of the magnetic pole which extends along a radial direction of the rotor.

6. The single-phase outer-rotor motor of any one of claims 1 to 5, wherein the outer surfaces of the tooth tips are located on the same cylindrical surface, a center axis of the cylindrical surface is coincident with a center axis of the rotor.

7. The single-phase outer-rotor motor of any one of claims 1 to 6, wherein the inner surface of the magnetic pole is a flat surface or arc surface, with a pole-arc coefficient greater than 0.75.

8. The single-phase outer-rotor motor of any one of claims 1 to 7, wherein the stator includes an insulating bracket attached around the stator core and the windings wound around the insulating bracket, the insulating bracket includes an upper bracket portion and a lower bracket portion, the upper bracket portion and the lower bracket portion cover the stator core from opposite axial ends thereof, each of the upper bracket portion and the lower bracket portion includes a ring portion attached around the yoke of the stator core, sleeve portions attached around the tooth bodies, and resisting portions resisting against the inner surfaces of the tooth tips.

9. The single-phase outer-rotor motor of claim 8, wherein a bent plate is disposed at an axial end of the resisting portion, which at least partially covers an end surface of an axial end portion of the tooth tip.

10. The single-phase outer-rotor motor of any one of claims 1 to 9, wherein a slit is formed in at least one connecting corner area between the tooth tip and the tooth body.

11. The single-phase outer-rotor motor of any one of claims 1 to 10, wherein the teeth of the stator core are separately formed and then interconnected to form the stator core.

12. The single-phase outer-rotor motor of any one of claims 1 to 11, wherein at least one tooth of the stator core is separately formed and then connected to the yoke.

13. The single-phase outer-rotor motor of any one of claims 1 to 12, wherein the rotor includes a plurality of permanent magnets which form the magnetic poles, and the permanent magnets are plastic-packaged into a whole body.

14. A single-phase permanent magnet motor, comprising:
an armature including a core and windings wound around the core, the core including an annular portion and a plurality of teeth extending outwardly from the annular portion, each of the teeth including a tooth body and a tooth tip extending from a distal end of the tooth body in a circumferential direction, a slot opening formed between each two adjacent tooth tips; and
a yoke surrounding the armature and at least one permanent magnet disposed on an inner surface of the rotor yoke for forming a plurality of magnetic poles, inner surfaces of the magnetic poles facing outer surfaces of the tooth tips with a gap formed therebetween;
wherein a width of the slot opening in the circumferential direction is less than or equal to five times of a minimum radial width of the gap, and a radial width of the gap corresponding with each magnetic pole progressively increases from a middle portion toward circumferential ends of the magnetic pole.

15. The single-phase permanent magnet motor of claim 14, wherein when the motor is de-energized, the yoke and the magnetic poles are capable of being positioned at an initial position by a leakage magnetic field generated by the at least one permanent magnet acting with the tooth tips of the armature, the initial position deviating from a dead-point position of the motor.

16. The single-phase permanent magnet motor of claim 14 or claim 15, wherein a width of the slot opening in the circumferential direction is less than or equal to three times of a minimum radial width of the gap.

17. The single-phase permanent magnet motor of any one of claims 14 to 16, wherein a ratio of a maximum radial width to a minimum radial width of the gap is greater than 1.5.

18. The single-phase permanent magnet motor of any one of claims 14 to 17, wherein a radial width of the gap corresponding with each magnetic pole is symmetrical with respect to a middle line of the magnetic pole which extends along a radial direction of the rotor.

19. The single-phase outer-rotor brushless motor of any one of claims 14 to 18, wherein the tooth tip of the tooth is symmetrical with respect to a radius of the motor that passes through a center of the tooth body of the tooth.

20. A single-phase outer-rotor motor comprising:
a stator comprising a stator core and windings wound around the stator core, the stator core comprising a yoke and a plurality of teeth extending outwardly from the yoke, each of the teeth comprising a tooth body and a tooth tip extending from a distal end of the tooth body in a circumferential direction; and
a rotor comprising a rotor yoke disposed around the stator core, and a permanent magnet disposed on an inner wall surface of the rotor yoke for forming a plurality of magnetic poles, an inner surface of the permanent magnet and an outer surface of the tooth tip being opposed to each other and defining a gap therebetween for allowing the rotor to rotate relative to the stator;
wherein when the motor is de-energized, the rotor stops at an initial position where a middle line of the tooth tip of the stator is closer to a middle line of a neutral area between two adjacent magnetic poles than middle lines of the two adjacent magnetic poles.

21. The single-phase outer-rotor motor of claim 20, wherein a slot opening is formed between each two adjacent tooth tips, a width of the slot opening in the circumferential direction is less than or equal to five times of a minimum radial width of the gap.

22. The single-phase outer-rotor motor of claim 20 or claim 21, wherein a slot opening is formed between each two adjacent tooth tips, a width of the slot opening in the circumferential direction is less than or equal to three times of a minimum radial width of the gap.

23. The single-phase outer-rotor motor of any one of claims 20 to 22, wherein the gap is an uneven gap, a radial width of the gap associated with each magnetic pole progressively increases from a center portion toward circumferential ends of the magnetic pole.

24. The single-phase outer-rotor motor of claim 23, wherein a ratio of a maximum radial width to a minimum radial width of the gap is greater than 1.5.

25. The single-phase outer-rotor motor of claim 23, wherein a radial width of the gap corresponding with each magnetic pole is symmetrical with respect to a middle line of the magnetic pole which extends along a radial direction of the rotor.

26. The single-phase outer-rotor motor of any one of claims 20 to 25, wherein the outer surfaces of the tooth tips are located on the same cylindrical surface, and a center axis of the cylindrical surface is coincident with a center axis of the rotor.

27. An electric apparatus comprising a single-phase permanent magnet motor of any one of claims 1-26.

28. The electric apparatus of claim 27 is a range hood, an air conditioner, a vehicle or a ventilation fan which further comprises an impeller driven by the rotor of the motor; or a washing machine or a dry machine which further comprises a speed reducing device driven by the rotor.
